# EUROPEAN PATENT SPECIFICATION

(11) **EP 0 544 200 B1**
(45) Date of publication and mention of the grant of the patent: **30.07.1997**
(21) Application number: 92119849.5
(22) Date of filing: 21.11.1992
(51) Int. Cl.: H02K 21/12, H02K 21/38

(54) **Hybrid synchronous machine with transverse magnetic flux**
Hybridische Synchronmaschine mit magnetischem Transversalfluss
Machine synchrone hybride à flux magnétique transversal

(30) Priority: 22.11.1991 SI 9100008
(43) Date of publication of application: 02.06.1993
(73) Proprietor: Detela, Andrej, YU-61000 Ljubljana, Slovenia (YU)
(72) Inventor: Detela, Andrej, YU-61000 Ljubljana, Slovenia (YU)
(74) Representative: Hanke, Hilmar

(56) References cited:
- DE-A- 3 626 149
- DE-U- 8 711 725
- GB-A- 518 298
- GB-A- 2 052 176
- US-A- 4 306 164
- US-A- 4 459 501
- PATENT ABSTRACTS OF JAPAN vol. 5, no. 63 (E-54)(735) 28 April 1981 & JP-A-56 12 856
- PATENT ABSTRACTS OF JAPAN vol. 9, no. 208 (E-338)(1931) 24 August 1985 & JP-A-60 70 958

## Description

The subject of the present invention is a Hybrid Synchronous Machine with Transverse Magnetic Flux whose structure is such that it provides smaller ohmic losses and a higher efficiency than in conventional motors with high torque per machine weight.

The technical problem which is successfully solved by the present invention is to find a structural solution and to design such a hybrid machine with transverse magnetic flux in which a high density of magnetic field in the air gap can be achieved and in which permanent magnets are mounted so as to allow high tangential speed of the rotor.

The hybrid electric machines that have the stator winding running coaxially around the main axis of the machine are already known. The stator winding mounted in this way produces a transverse magnetic flux. A similar solution is described by H. Weh, H. May and M. Shalaby in their article "Highly Effective Magnetic Circuits for Permanent Magnet Excited Synchronous Machines", International Conference on Electric Machines, Cambridge MA., 13-15 Aug. 1990, p. p. 1040-1045.

The structural solution of an electric machine described in the above article offers a partial solution to our technical problem as far as ohmic losses are concerned, its winding being designed to produce transverse magnetic flux. The basic structural solution as described in this article has, due to the low density of the magnetic field of permanent magnets (these being installed centrally, one beside the other along the rotor circumference, so that magnetization runs in the radial direction) a feebler torque, while in an improved version, which is also described by the article, the magnets are arranged so as to produce an effect called "the concentration of magnetic flux". Such "concentration of magnetic flux" in the machines whose stator windings do not produce transverse magnetic flux is also described in German patent document DE 34 01 163.

In the structural solution described in the above article permanent magnets are placed in upright position (i.e. shifted by 90° with regard to the position of permanent magnets in the first case, so that the magnetization in the magnets runs in tangential direction). In this solution, the magnets are placed into or fixed to the recesses in the rotor.

Permanent magnets mounted in this way produce a magnetic field of greater density, and a machine with this rotor has a good torque per weight. A drawback in this solution is the mode of installation of the great number of permanent magnets; these can be glued or otherwise fixed to the rotor supporting ring. The position of the permanent magnets being such that they can only be glued or attached by their smallest surface, this solution is not recommended for higher tangential speeds of the rotor. The fact that the magnets to be installed have to be magnetized in advance presents a certain technical problem, especially due to the great number of magnets and to the relatively high density of magnetic energy.

Document DE-A-3 626 149 discloses a single-phase hybrid synchronous machine with transverse magnetic flux, in which the rotor is fitted with an assembly comprising a radially magnetised permanent magnet in the form of a hollow cylindrical shell sandwiched between outer and inner cogged cylindrical shells of soft magnetic material. The stator poles of the yoke are magnetically coupled with the rotor poles of the cogged cylinders. The cogged cylinders are provided with rotor poles at both of their extremities, and the rotor poles of the inner cylinder are tangentially shifted by one half of a pole division with respect to those of the outer cylinder. Rotor assemblies similar to that of the present application are known from stepper motors such as those of documents DE-U-87 11725, JP-A-56-12856 and US-A-4 306 164, which, however, disclose two-phase motors having only a single rotor assembly.

The present invention aims to solve the technical problem of designing a hybrid machine of the type initially mentioned in which a high density of magnetic field in the air gap can be achieved and in which permanent magnets are mounted so as to allow high tangential speed of the rotor.

These and other objects are achieved by a hybrid synchronous motor in accordance with the appended claim 1. Advantageous embodiments of the invention are defined in the dependent claims.

The invention will be further explained by an example and illustrated by drawings showing as follows:
- **Figure 1**: cross-section of a two-phase Hybrid Machine with Transverse Magnetic Flux according to the invention;
- **Figure 2**: axonometric view of a part of rotor assembly in partial cross-section;
- **Figure 3**: cross-section of a single-phase Hybrid Synchronous Machine with Transverse Magnetic Flux.

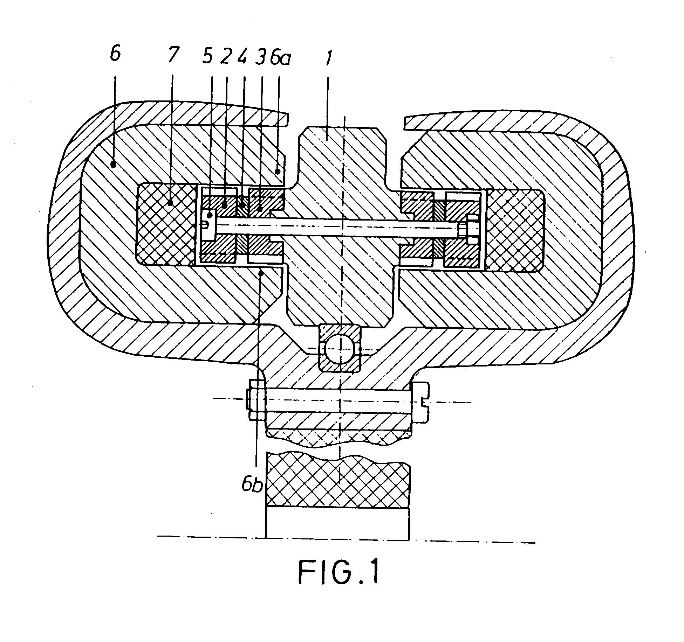

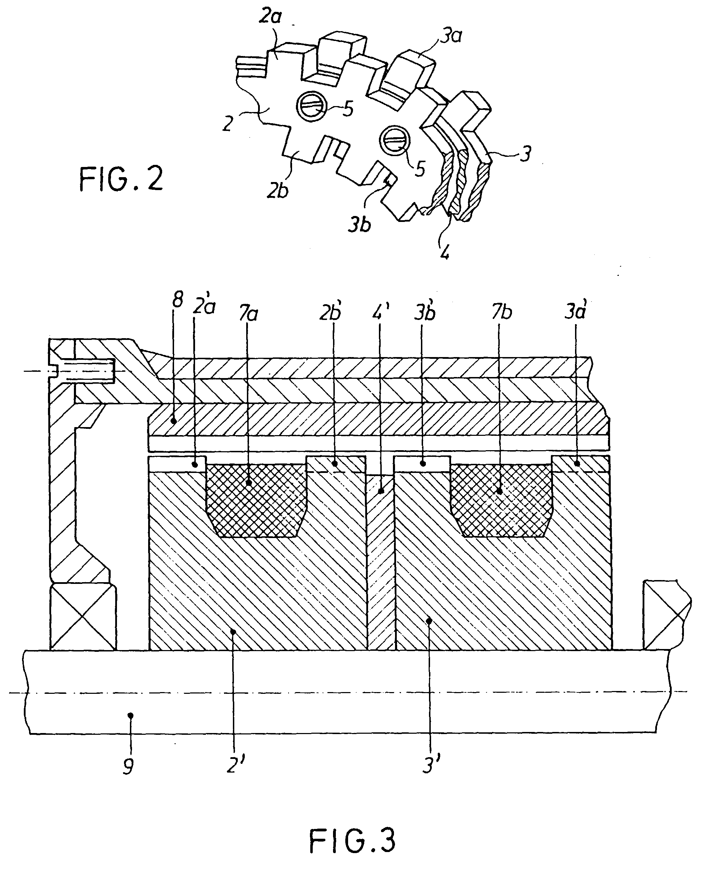

A two-phase version of the Hybrid Machine with Transverse Magnetic Flux according to the invention is shown in Figure 1. To each side of the rotor armature (1) at least one assembly is fixed, each consisting of two cogged rings (2, 3) of ferromagnetic material fitted with rotor poles (2 a, 2 b, 3 a, 3 b) and a magnetized disk (4). The cogged rings (2, 3) and the magnetized disk (4) can be held together by means of screws (5), as shown in Figure 2. The cogged rings (2, 3) in the assembly are placed so that their poles (2 a, 3 a) are mutually shifted, as shown in Figure 2. The same applies to the poles (2b, 3 b). The magnetized disk (4) is magnetized so as to produce a magnetic flux that can be directed either from the cogged ring (3) to the cogged ring (2) or in the opposite direction.

In the magnetic juncture with the cogged rings (2, 3) and the magnetized disk (4) lie stator poles (6 a, 6 b) of yokes (6) which encircle the stator winding (7). The number of stator poles (6 a) equals the number of rotor poles (2 a, 3 a) of the cogged rings (2, 3).

At a chosen moment of observation, when the stator pole (6 a) covers the rotor pole (3 a) and, due to the shift of the cogged ring (3) against the cogged ring (2), the stator pole (6 b) covers the rotor pole (2 b), a current starts running in the winding (7) in such a direction that the density of magnetic field in the gap between the stator pole (6 a) and the rotor pole (3 a) of the cogged ring (3), and between the stator pole (6 b) and the rotor pole (2 b) of the cogged ring (2) decreases, while the density of magnetic field in the gaps between the stator pole (6 a) and the rotor pole (2 a) of the cogged ring (2) and between the stator pole (6 b) and the rotor pole (3 b) of the cogged ring (3) increases. Because of such momentanous magnetic state the stator poles attract the rotor poles in a position which is shifted by 1/2 of the pole's division with regard to the position at the chosen moment, so that in the end position of observation the stator pole (6 b) coincides with the rotor pole (3 b) of the cogged ring (3) and the stator pole (6 a) coincides with the rotor pole (2 a) of the cogged ring (2). At this moment the direction of current in the winding (7) inverts. This causes the rotor to move forwards, so that it reassumes the initially observed position of mutual covering of the rotor and stator poles. Through the change of current direction in the stator winding (7) the rotation of rotor is enabled, while the change itself can be achieved by electronic commutation.

In Figure 3 a single-phase Hybrid Synchronous Machine with Transverse Magnetic Flux is shown with the cogged rings (2', 3') designed on the stator armature (9). In the centre of each ring (2', 3') there is one half (7 a, 7 b) of coaxial winding (7). With such installation the Synchronous Machine can be designed with an external rotor, where the salient poles of the rotor (8) are cogged along the entire axis and in the same pole division as the salient poles (2 a', 2 b', 3 a', 3 b') of the cogged rings (2', 3').

The described structure of Hybrid Synchronous Machine with Transverse Magnetic Flux solves the technical problem of great density of transverse magnetic flux and, with the introduction of the magnetized disk (4), effectively solves the problem of installing permanent rotor magnets.

## Claims

1. Hybrid synchronous motor with transverse magnetic flux comprising a rotor (1) and a stator, the stator comprising a number of yokes (6) with salient ferromagnetic poles uniformly distributed around the axis of rotation of the motor, the yokes in each phase being provided with a coil (7), wherein
the rotor (1) is fitted with a number of rotor assemblies at least equal to the number of phases, each assembly being mounted for rotation with the rotor (1) and coaxially therewith, and consisting of:
first (2) and second (3) ferromagnetic rings, axially separated by, and magnetically coupled with, the end faces of an axially polarised annular magnet (4), the outer periphery of each ring (2, 3) forming a number of uniformly distributed, radially directed rotor magnetic poles equal to the number of poles on the stator yokes (6) in one motor phase, the poles (2a, 2b) on the first ring (2) being angularly displaced by half of one pole division with respect to the poles (3a, 3b) on the second ring (3), and wherein
the stator poles (6a, 6b) of the stator yokes (6) are magnetically coupled with the rotor poles (2a, 2b, 3a, 3b) of the respective rotor assembly, so that magnetic flux passes to and from the magnet (4) radially through the rings (2, 3), rotor poles (2a, 2b, 3a, 3b), radial air gap and stator poles (6a, 6b) [5].

2. Motor according to claim 1 wherein the rings (2, 3) are cogged to form the rotor poles.

3. Motor according to claim 2 wherein each ring (2, 3) is cogged on both an inner and an outer periphery to form the rotor poles and wherein the inner rotor poles (2b, 3b) are angularly displaced by one half of a pole division with respect to the outer rotor poles (2a, 3a) on the same ring.

## Patentansprüche

1. Hybrid Synchron-Motor mit transversalem Magnetfluß, mit einem Rotor (1) und einem Stator, welcher eine Anzahl an Jochen (6) mit ausgeprägten ferromagnetischen Polen umfaßt, die gleichmäßig um die Drehachse des Motors verteilt sind, und die Joche in jeder Phase mit einer Spule (7) versehen sind, wobei
der Rotor (1) mit einer Anzahl zusammengesetzter Rotorbauteile ausgerüstet ist, wobei die Anzahl zumindest gleich der Anzahl der Phasen ist, und jedes Bauteil bzw. jeder Satz drehbar mit dem Rotor (1) befestigt ist und koaxial zu diesem verläuft, und
erste (2) und zweite (3) ferromagnetische Ringe aufweist, welche durch die Endflächen eines axial polarisierten ringförmigen Magneten (4) getrennt und magnetisch mit diesem gekoppelt sind, der äußere Umfang eines jeden Rings (2, 3) eine Anzahl gleichmäßig verteilter, radial gerichteter Rotormagnetpole bildet, wobei die Anzahl gleich der Anzahl der Pole auf den Statorjochen (6) in einer einzigen Motorphase ist, die Pole (2a, 2b) auf dem ersten Ring (2) um die Hälfte einer Polteilung bezüglich der Pole (3a, 3b) auf dem zweiten Ring (3) winklig versetzt ist, und wobei
die Statorpole (6a, 6b) der Statorjoche (6) magnetisch mit den Rotorpolen (2a, 2b, 3a, 3b) des entsprechenden Rotorbauteils bzw. -satzes gekoppelt sind, so daß ein magnetischer Fluß zum und vom Magnet (4) radial durch die Ringe (2, 3), die Rotorpole (2a, 2b, 3a, 3b), einen radialen Luftspalt und die Statorpole (6a, 6b) gelangt.

2. Motor nach Anspruch 1, wobei die Ringe (2, 3) zwecks Bildung der Rotorpole gezahnt sind.

3. Motor nach Anspruch 2, wobei jeder Ring (2, 3) sowohl auf einem inneren als auch auf einem äußeren Umfang zwecks Bildung der Rotorpole gezahnt ist und die inneren Rotorpole (2b, 3b) um die Hälfte einer Polteilung bezüglich der äußeren Rotorpole (2a, 3a) auf dem gleichen Ring winklig versetzt sind.

## Revendications

1. Machine synchrone hybride à flux magnétique transversale comprenant un rotor (1) et un stator, le stator comprenant un certain nombre de culasses (6) avec pôles saillants et ferromagnétiques, les derniers étant régulièrement distribués autour de l'axe de rotation de la machine, les culasses dans chaque phase étant pourvus d'une bobine (7), où
le rotor (1) est équipé avec un certain nombre d'éléments de rotor dont le nombre est au moins égal au nombre de phases, chaque élément étant monté pour tourner avec le rotor (1) et coaxialement avec ce dernier, et comprenant:
un premier (2) et un second (3) anneau ferromagnétique, les derniers étant séparés et couplés par aimantation par les faces d'extrémité d'un aimant annulaire axialement polarisé (4), la périphérie extérieure de chaque anneau (2, 3) formant un certain nombre de pôles de rotor magnétiques étant orientés radialement et distribués régulièrement, le nombre des pôles étant égal au nombre des pôles sur les culasses de stator (6) dans une phase de la machine, les pôles (2a, 2b) sur le premier anneau (2) étant angulairement écartés par la moitié d'une division de pôle relativement aux pôles (3a, 3b) sur le second anneau (3), et
les pôles de stator (6a, 6b) desdits culasses de stator (6) sont couplés par aimantation avec les pôles de rotor (2a, 2b, 3a, 3b) de l'élément de rotor respective, de manière que le flux magnétique passe à et de l'aimant (4), ceci radialement à travers les anneaux (2, 3), les pôles de rotor (2a, 2b, 3a, 3b), l'entrefer radial et les pôles de stator (6a, 6b).

2. Machine selon la revendication 1, dans laquelle les anneaux (2, 3) sont endentés pour former les pôles de rotor.

3. Machine selon la revendication 1, dans laquelle chaque anneau (2, 3), pour former les pôles de rotor, est endenté non seulement dans la périphérie interne mais aussi dans la périphérie externe, et dans laquelle les pôles de rotor internes (2b, 3b) sont angulairement écartés par la moitié d'une division de pôle relativement aux pôles de rotor externes (2a, 3a) sur le même anneau.
